# EUROPÄISCHE PATENTANMELDUNG

(11) **EP 3 561 272 A1**
(43) Veröffentlichungstag der Anmeldung: **30.10.2019**
(21) Anmeldenummer: 19167280.7
(22) Anmeldetag: 04.04.2019
(51) Int. Cl.: F02D 41/00, F02D 41/02, F02D 41/14, F02D 41/24, F02D 23/00, F02B 39/10

(54) **VERFAHREN ZUM BETREIBEN EINER BRENNKRAFTMASCHINE SOWIE EINE BRENNKRAFTMASCHINE**

(30) Priorität: 24.04.2018 DE 102018206246; 19.03.2019 DE 102019107009
(71) Anmelder: VOLKSWAGEN AKTIENGESELLSCHAFT, 38440 Wolfsburg (DE)
(72) Erfinder: Pott, Ekkehard, 38518 Gifhorn (DE); Blei, Ingo, 38110 Braunschweig (DE); Bunkus, Johannes, 38442 Wolfsburg (DE); Westendorf, Johannes, 38104 Braunschweig (DE)
(74) Vertreter: Gulde & Partner

(57) **Zusammenfassung**

Die Erfindung betrifft ein Verfahren zum Betreiben einer Brennkraftmaschine (10), insbesondere eines Dieselmotors, mit einem Luftversorgungssystem (50), in welchem ein wahlweise antreibbarer Verdichter (20) angeordnet ist. Die Brennkraftmaschine (10) ist mit einem Bordnetz (86) verbunden, wobei an das Bordnetz (86) der wahlweise antreibbare Verdichter (20) angeschlossen ist und das Bordnetz (86) den wahlweise antreibbaren Verdichter (20) und ein Steuergerät (90) mit elektrischer Energie versorgt. Das Steuergerät (90) bestimmt das Ein- und/oder Abschalten des wahlweise antreibbaren Verdichters (20). Dazu wird ein Ist-Ladedruck (p_{IST}) der Brennkraftmaschine (10) mit dem Steuergerät (90) ermittelt, dieser Ist-Ladedruck (p_{IST}) wird mit einem Soll-Ladedruck (p_{SOLL}) verglichen, wobei der Soll-Ladedruck (p_{SOLL}) von dem Steuergerät (90) berechnet wird und/oder aus einem abgelegten Kennfeld entnommen wird und in einem folgenden Schritt die Abweichung (Δp) zwischen Soll-Ladedruck (p_{SOLL}) und Ist-Ladedruck (p_{IST}) durch das Steuergerät (90) bestimmt wird. Dabei wird diese Abweichung (Δp) in einem Entscheidungsschritt mit einem ersten Schwellenwert (S1) verglichen, wobei der wahlweise antreibbare Verdichter (20) eingeschaltet wird, wenn die Abweichung (Δp) größer als der erste Schwellenwert (S1) ist.

Es ist vorgesehen, dass der erste Schwellenwert (S1) aus einem jeweiligen Basisschwellenwert (S_{B}) besteht, der durch Korrekturwerte (K_{f}) in Abhängigkeit des Zustandes der Brennkraftmaschine (10) und/oder eines durch die Brennkraftmaschine (10) betriebenen Objekts korrigiert wird.

Die Erfindung betrifft ferner eine Brennkraftmaschine (10) zur Durchführung eines solchen Verfahrens.

## Beschreibung

Die Erfindung betrifft eine Verfahren zum Betreiben einer Brennkraftmaschine mit einem wahlweise antreibbaren Verdichter sowie eine Brennkraftmaschine zum Durchführen eines solchen Verfahrens gemäß den Oberbegriffen der unabhängigen Patentansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen StickoxidEmissionen und Rußpartikeln eine Herausforderung für die Motorenentwickler dar. Der Ausstoß von Stickoxiden und Rußpartikeln ist gesetzlich begrenzt. In Zukunft sind weitere Verschärfungen der gesetzlichen Grenzwerte bezüglich dieser beiden Schadstoffe zu erwarten. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren sowie einem Ottopartikelfilter. Bei Dieselmotoren finden aktuell Abgasnachbehandlungssysteme Verwendung, welche einen Oxidationskatalysator oder einen NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Durch die zunehmenden Anforderungen an die Abgasreinigung steigt die Anzahl der Abgasnachbehandlungskomponenten sowie deren Bauraumbedarf. Diese verursacht Package-, Gewichts- und Kostenprobleme. Zudem wird die Aktivierung der Abgasnachbehandlungskomponenten immer herausfordernder, wobei zum Aufheizen der Abgasnachbehandlungskomponenten zusätzliche Energie benötigt wird, welche die Kraftstoffeffizienz des Verbrennungsmotors reduziert und zu einem Mehrverbrauch führt. Es ist bekannt, dass durch ein Anheben der Abgasrückführungsrate die Stickoxid-Rohemissionen (NOx-Rohemissionen) gemindert werden können, jedoch gleichzeitig die Partikelemissionen ansteigen. Dieser Effekt, welcher auch als "Partikel-NOx-Tradeoff" bezeichnet wird, nimmt bei positiven Lastsprüngen mit der Dynamik der Laständerung noch zu, das heißt, die Partikelemissionen steigen zur Sicherstellung von niedrigen Stickoxidemissionen überproportional an.

Es ist bekannt, bei einer Brennkraftmaschine zusätzlich zum Abgasturbolader einen elektrisch antreibbaren Verdichter zu verwenden, um das Ansprechverhalten der Brennkraftmaschine zu verbessern. Ferner ist bekannt, dass durch das temporäre Zuschalten eines solchen elektrisch angetriebenen Verdichters aufgrund der zumindest temporär verbesserten Füllung der Brennräume eine deutliche Minderung der Partikelemissionen herbeigeführt werden kann. Es ist jedoch auch bekannt, dass der Strombedarf des elektrisch antreibbaren Verdichters mit zunehmender Leistungsaufnahme steigt, was zu einem Mehrverbrauch der Brennkraftmaschine und einem damit verbundenen Anstieg der Kohlenstoffdioxidemissionen führt. Ferner ist aufgrund des sich verringernden Spülgefälles der Betrieb der Hochdruck-Abgasrückführung erschwert.

Aus der DE 10 2014 223 491 A1 ist ein Verbrennungsmotor mit einem Ansaugtrakt und einer Abgasanlage bekannt, welcher mittels eines Abgasturboladers und eines elektrischen Verdichters aufgeladen ist. In der Abgasanlage ist ein elektrisch beheizbarer NOx-Speicherkatalysator vorgesehen, welchem ein SCR-Katalysator nachgeschaltet ist. Der Verbrennungsmotor weist ferner eine Gaszufuhreinrichtung auf, mit welcher eine von dem Verbrennungsmotor unabhängige Gasströmung durch die Abgasanlage erzeugt werden kann. Dabei wird der passive NOx-Speicherkatalysator auf eine Temperatur oberhalb dessen Desorptionstemperatur erhitzt und der SCR-Katalysator auf dessen Betriebstemperatur gehalten, wobei der passive NOx-Speicherkatalysator entladen wird.

Die WO 2017 / 063 832 A1 offenbart ein Kraftfahrzeug, insbesondere ein Hybridfahrzeug, mit einem elektrischen 48-Volt-Bordnetz, wobei ein elektrisches Heizelement eines Katalysators und ein elektrischer Zusatzverdichter durch das 48-Volt-Bordnetz betrieben werden.

Der Erfindung liegt nun die Aufgabe zugrunde, die Abgasemissionen eines Verbrennungsmotors mit einem elektrisch antreibbaren Verdichter zu reduzieren und die Leistung des Verbrennungsmotors zu optimieren.

Die Aufgabe wird durch ein Verfahren zum Betrieb einer Brennkraftmaschine mit einem wahlweise antreibbaren Verdichter und einem Bordnetz der Brennkraftmaschine gelöst, wobei an das Bordnetz der Brennkraftmaschine der wahlweise antreibbare Verdichter angeschlossen ist und das Bordnetz den wahlweise antreibbaren Verdichter und ein Steuergerät mit elektrischer Energie versorgt. Das Steuergerät bestimmt ein Ein- und/oder Abschalten des wahlweise antreibbaren Verdichters. Dazu wird ein Ist-Ladedruck der Brennkraftmaschine mit dem Steuergerät ermittelt, dieser Ist-Ladedruck mit einem Soll-Ladedruck verglichen, wobei der Soll-Ladedruck von dem Steuergerät berechnet wird und/oder aus einem im Steuergerät abgelegten Kennfeld entnommen wird. In einem folgenden Schritt wird die Abweichung zwischen dem Ist-Ladedruck und dem Soll-Ladedruck durch das Steuergerät bestimmt, wobei diese Abweichung in einem Entscheidungsschritt mit einem ersten Schwellenwert verglichen wird. Sollte diese Abweichung größer als der erste Schwellenwert sein, so wird der wahlweise antreibbare Verdichter eingeschaltet oder ausgeschaltet.

Es ist vorgesehen, dass der erste Schwellenwert aus einem jeweiligen Basisschwellenwert besteht, welcher durch Korrekturwerte in Abhängigkeit des Zustands der Brennkraftmaschine und/oder eines durch die Brennkraftmaschine betriebenen Objekts korrigiert wird.

So können auf vorteilhafte Weise die Interaktion verschiedener Verbraucher am Bordnetz und die Betriebsstrategie der Brennkraftmaschine aufeinander abgestimmt werden.

Durch die in den abhängigen Ansprüchen genannten Merkmale sind vorteilhafte Weiterentwicklungen und nicht triviale Verbesserungen des im unabhängigen Anspruch angegebenen Verfahrens zum Betreiben einer Brennkraftmaschine möglich.

In einer Verbesserung des Verfahrens ist vorgesehen, das der wahlweise angetriebene Verdichter in einem dynamischen Betrieb der Brennkraftmaschine zugeschaltet wird, um die Partikelrohemissionen in der mindestens einen Brennkammer der Brennkraftmaschine zu senken. Durch das Zuschalten des wahlweise antreibbaren Verdichters wird die Füllung der Brennkammern in einem dynamischen Betrieb der Brennkraftmaschine, insbesondere bei positiven Lastsprüngen verbessert, wodurch der größeren Menge an eingespritztem Kraftstoff mehr Frischluft zur Umsetzung zur Verfügung steht. Dies reduziert die Partikelemissionen bei der Verbrennung, wodurch weniger Rußpartikel durch den Partikelfilter aus dem Abgasstrom der Brennkraftmaschine entfernt werden müssen. Dies verlängert die Regenerationsintervalle des Partikelfilters, wodurch der Kraftstoffverbrauch und die damit verbundenen Kohlenstoffdioxidemissionen verringert werden können.

Dadurch kann vorteilhaft eine Abschaltung unabhängig von einer Einschaltung des Verdichters vorgenommen werden. Alternativ kann auch vorgesehen sein, dass erneut der erste Schwellenwert genutzt mit der ersten Korrektur genutzt wird. Wenn zwei Schwellenwerte mit zwei Korrekturen genutzt werden, können die Korrekturtabellen und Korrekturwerte unterschiedlich sein.

Dadurch kann vorteilhaft eine flexiblere Schaltregel aufgestellt werden. Dies erlaubt eine bessere Reaktion auf die Brennkraftmaschine und die Objekte, die von der Brennkraftmaschine betrieben werden.

In bevorzugter Ausgestaltung der Erfindung ist vorgesehen, dass wenn der wahlweise antreibbare Verdichter eingeschaltet worden ist, erneut die Abweichung zwischen dem Ist-Ladedruck und dem Soll-Ladedruck bestimmt wird und nun mit einem zweiten Schwellenwert verglichen wird. Wenn die Abweichung kleiner als der zweite Schwellenwert ist, so wird der wahlweise antreibbare Verdichter abgeschaltet oder ausgeschaltet.

In einer vorteilhaften Ausführungsform des Verfahrens ist vorgesehen, dass erneut mit einer Bestimmung der Abweichung zwischen dem Ist-Ladedruck und dem Soll-Ladedruck begonnen wird, wenn sich ein Einschaltzustand des wahlweise antreibbaren Verdichters über ein definiertes Zeitintervall nicht ändert. Dadurch kann verhindert werden, dass der wahlweise antreibbare Verdichter zu lange zugeschaltet wird und somit unnötig viel Energie verbraucht. Dadurch kann der Mehrverbrauch der Brennkraftmaschine durch den wahlweise antreibbaren Verdichter minimiert werden.

In einer bevorzugten Ausführungsform des Verfahrens ist vorgesehen, dass die Entscheidung zum Zu- oder Abschalten des wahlweise antreibbaren Verdichters auf Basis mindestens eines variablen Betriebsparameters der Brennkraftmaschine erfolgt.

Dadurch kann vorteilhaft die genaue Situation der Brennkraftmaschine und/oder weiterer Objekte, die von der Brennkraftmaschine betrieben werden, in die Entscheidung des Steuergeräts einfließen. Mit Zuständen der Brennkraftmaschine sind allgemein Betriebszustände und Zustände der Umgebung gemeint. Durch die Brennkraftmaschine betriebene Objekte können unter anderem Nebenaggregate, wie Lichtmaschinen, Klimaanlagen oder Seilwinden, sein.

Eine erste Gruppe, die den größten Einfluss auf die Korrekturwerte hat, kann umfassen: den Motorbetriebspunkt der Brennkraftmaschine (zum Beispiel Drehzahl und/oder Fahrerwunschmoment), die Dynamik der Betriebspunktänderung der Brennkraftmaschine, die Kühlmitteltemperatur der Brennkraftmaschine, den Ladezustand einer Batterie der Brennkraftmaschine, die Belastung eines Bordnetzes der Brennkraftmaschine und/oder die modellierte und/oder gemessene Bauteiltemperatur des wahlweise antreibbaren Verdichters und/oder eines elektrischen Motors zum Betreiben des wahlweise antreibbaren Verdichters.

Eine zweite Gruppe, die den zweitgrößten Einfluss auf die Korrekturwerte hat, kann umfassen: den Umgebungsdruck der Brennkraftmaschine, die Umgebungstemperatur der Brennkraftmaschine, die Abgastemperatur vor und/oder hinter einem Abgasturbolader der Brennkraftmaschine, die Temperatur zumindest einer Abgasreinigungskomponente, die modellierte und/oder gemessene Partikelrohemission im aktuellen Betriebspunkt der Brennkraftmaschine, die modellierte und/oder gemessene Stickoxidrohemission im aktuellen Betriebspunkt der Brennkraftmaschine und/oder die Fahrzyklusauswertung hinsichtlich des Mittelwerts und/oder der statistischen Verteilung von Geschwindigkeit, Beschleunigung, Gangwechsel, Gaspedalstellung, NOX-Rohemissionen, Partikelrohemissionen.

Eine dritte Gruppe, die den drittgrößten Einfluss auf die Korrekturwerte hat, kann umfassen: den Füllstand des Partikelfilters der Brennkraftmaschine, den Füllstand des NOx-Speicherkatalysators der Brennkraftmaschine und/oder den eingelegten Gang eines Fahrzeugs, das von der Brennkraftmaschine betrieben wird.

Durch die Einteilung in eine oder mehrere Gruppen kann auf vorteilhafte Weise eine Priorisierung und intelligente Entscheidung zum Betrieb des Verdichters geschlossen werden.

Besonders bevorzugt ist dabei, wenn die Entscheidung auf Basis der Drehzahl der Brennkraftmaschine, einer Drehmomentanforderung an die Brennkraftmaschine, einer Dynamik der Betriebspunktänderung der Brennkraftmaschine oder einer Kühlmitteltemperatur der Brennkraftmaschine erfolgt. Da diese Parameter den größten Einfluss auf die Rohemissionen der Brennkraftmaschine haben, sind diese Parameter besonders geeignet, dass Zu- und Abschalten des wahlweise betreibbaren Verdichters zu steuern, um die Rohemissionen zu minimieren.

In einer vorteilhaften Ausführungsform der Erfindung wird vorgeschlagen, dass die Entscheidung zum Zu- oder Abschalten des wahlweise antreibbaren Verdichters auf Basis einer Schadstoffkonzentration in der Abgasanlage oder eines Betriebsparameters mindestens einer Abgasnachbehandlungskomponente erfolgt.

Da die Rohemissionen zur Optimierung der Endrohremissionen stets im Zusammenhang mit der Funktion der Abgasnachbehandlungskomponenten zu betrachten ist, können die Betriebsparameter der Abgasnachbehandlungskomponenten weitere wichtige Hinweise geben, wann der wahlweise betreibbare Verdichter zugeschaltet oder abgeschaltet werden soll. Dabei ist insbesondere auf einen bestmöglichen Kompromiss zwischen NOx-Rohemissionen und Partikelrohemissionen zu achten, um bestmögliche Endrohremissionen zu erzielen.

Besonders bevorzugt ist dabei, wenn die Entscheidung auf Basis einer Temperatur einer Abgasnachbehandlungskomponente, einer Rußbeladung eines Partikelfilters, eines Beladungszustands eines NOx-Speicherkatalysators, der NOx-Rohemission der Brennkraftmaschine, der Partikelrohemission der Brennkraftmaschine oder der Abgastemperatur an zumindest einer Stelle im Abgaskanal erfolgt.

In einer weiteren vorteilhaften Ausführungsform der Erfindung wird vorgeschlagen, dass die Entscheidung zum Zu- oder Abschalten des wahlweise antreibbaren Verdichters auf Basis eines durch das Steuergerät berechneten Parameters erfolgt. Berechnete Parameter können schneller zur Verfügung gestellt werden, da hierbei keine Trägheit eines Sensors und einer damit verbundenen Regelstrecke zu berücksichtigen ist. Da insbesondere Emissionsdurchbrüche aufgrund der Speicherfähigkeit der Abgaskomponenten erst deutlich zeitversetzt ermittelt werden können, bietet eine Steuerung des Zu- und Abschaltens des wahlweise betreibbaren Verdichters über berechnete Parameter einen zeitlichen Vorteil.

Besonders bevorzugt ist dabei, wenn die Entscheidung auf Basis einer modellierten NOx-Rohemission, einer modellierten Partikelrohemission, einer in die Brennräume eindosierten Kraftstoffmenge oder einer modellierten Beladung einer Abgasnachbehandlungskomponente erfolgt. Da insbesondere die NOx-Emissionen steigen, wenn die Verbrennung in den Brennkammern bezüglich minimaler Rußemissionen optimiert wird, sind die modellierten NOx-Emissionen sowie die modellierten Umsatzfähigkeiten auf den Abgasnachbehandlungskomponenten besonders hilfreich, um das Brennverfahren der Brennkraftmaschine zu optimieren.

In einer weiteren vorteilhaften Ausführungsform des Verfahrens ist vorgesehen, dass die Entscheidung zum Zu- oder Abschalten des wahlweise antreibbaren Verdichters auf Basis eines weiteren Kraftfahrzeugparameters oder Umweltparameters erfolgt. Alternativ oder zusätzlich können auch Umweltparameter wie die Umgebungstemperatur oder der Umgebungsdruck sowie weitere Fahrzeugparameter wie die Gaspedalstellung oder der gewählte Gang genutzt werden, um das Verfahren zum Betreiben der Brennkraftmaschine weiter zu optimieren.

Besonders bevorzugt ist dabei, wenn die Entscheidung zum Zu- oder Abschalten des wahlweise antreibbaren Verdichters auf Basis einer eingelegten Getriebeübersetzung, eines Gangwechsels im Getriebe, eines Beschleunigungswertes, einer Gaspedalstellung oder einer Umgebungstemperatur oder eines Umgebungsdrucks erfolgt.

In einer weiteren Verbesserung des Verfahrens ist vorgesehen, dass die Entscheidung zum Zu- oder Abschalten des wahlweise antreibbaren Verdichters auf Basis einer Kombination von mindestens zwei Betriebsparametern erfolgt. Durch zwei Parameter ist eine weitere Verbesserung für das Zu- und Abschalten des wahlweise betreibbaren Verdichters möglich. Insbesondere kann über den ersten Betriebsparameter ein Korrekturwert für den ersten Schwellenwert und über den zweiten Betriebsparameter ein Korrekturfaktor für den zweiten Schwellenwert vorgegeben werden. Somit lässt sich die Steuerung des wahlweise betreibbaren Verdichters weiter verbessern.

Erfindungsgemäß wird eine Brennkraftmaschine mit einem wahlweise antreibbaren Verdichter und einem Bordnetz der Brennkraftmaschine vorgeschlagen, wobei an das Bordnetz der Brennkraftmaschine der wahlweise antreibbare Verdichter angeschlossen ist und das Bordnetz den wahlweise antreibbaren Verdichter und ein Steuergerät mit elektrischer Energie versorgt. Dabei umfasst das Steuergerät zumindest einen Rechner und zumindest einen Speicher, wobei in dem Speicher ein Programm abgelegt ist, welches bei wenigstens teilweiser Ausführung im Rechner die Schritte eines erfindungsgemäßen Verfahrens zum Betreiben der Brennkraftmaschine ausführt.

Durch eine solche Brennkraftmaschine können die Emissionen, insbesondere die Partikelemissionen in dynamischen Betriebssituationen der Brennkraftmaschine signifikant reduziert werden. Ferner lassen sich durch die Verringerung der Partikelrohemissionen auch die weiteren Emissionsparameter verringern, sodass die Endrohremissionen verringert werden können und/oder der Aufwand für die Abgasnachbehandlung verringert werden kann. Dies kann zu einer Kraftstoffeinsparung der Brennkraftmaschine und somit zu geringeren Kohlenstoffdioxidemissionen führen.

In einer bevorzugten Ausführungsform der Brennkraftmaschine ist vorgesehen, dass die Brennkraftmaschine ein Luftversorgungssystem und eine Abgasanlage umfasst, wobei in dem Luftversorgungssystem ein Verdichter eines Abgasturboladers und stromabwärts des Verdichters der wahlweise antreibbare Verdichter angeordnet ist. Durch ein in-Reihe-Schalten des Verdichters des Abgasturboladers und des wahlweise antreibbaren Verdichters kann der wahlweise antreibbare Verdichter besonders einfach bedarfsgerecht zugeschaltet werden. Dabei kann der Verdichter in Betriebspunkten der Brennkraftmaschine mit geringer Dynamik die Luftversorgung vollständig übernehmen, wodurch der Mehrverbrauch durch das Zuschalten des wahlweise betreibbaren Verdichters gering gehalten wird.

Bevorzugt ist dabei, wenn der wahlweise antreibbare Verdichter in einem Bypass zum Ansaugkanal des Luftversorgungssystems angeordnet ist, wobei der Bypass durch ein Steuerelement, insbesondere durch eine Steuerklappe, geöffnet oder verschlossen werden kann. Durch eine Anordnung des wahlweise antreibbaren Verdichters in einem Bypass kann dieser besonders einfach bedarfsgerecht zu- und abgeschaltet werden. Dabei liegt der wahlweise antreibbare Verdichter im abgeschalteten Betriebszustand nicht im Ansaugkanal, wodurch der Strömungswiderstand nicht ansteigt. Dabei kann durch das Steuerelement auf einfache Art und Weise die Frischluftversorgung über den Bypass und/oder den Ansaugkanal erfolgen, wodurch ein bedarfsgerechtes Zuschalten des wahlweise antreibbaren Verdichters erleichtert wird.

In einer bevorzugten Ausführungsform der Brennkraftmaschine ist vorgesehen, dass die Spannung des Bordnetzes 40 Volt - 56 Volt, insbesondere 48 Volt beträgt. Durch ein 48-Volt-Bordnetz kann auf vergleichsweise einfache Art und Weise hinreichend viel elektrische Leistung bereitgestellt werden, um den wahlweise antreibbaren Verdichter zeitnah auf eine zum Aufbau des Ladedrucks benötigte Drehzahl zu bringen. Zudem können weitere Verbraucher durch das 48-Volt-Bordnetz ausreichend mit elektrischer Energie versorgt werden.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel für eine erfindungsgemäße Brennkraftmaschine mit einem elektrisch antreibbaren Verdichter;
- Figur 2: ein Ablaufdiagramm zur Durchführung eines erfindungsgemäßen Verfahrens zum Betreiben einer Brennkraftmaschine;
- Figur 3: ein Ladedruckaufbau bei der Durchführung eines erfindungsgemäßen Verfahrens zum Betreiben einer Brennkraftmaschine; und
- Figur 4: die Partikelemissionen bei der Durchführung eines erfindungsgemäßen Verfahrens im Vergleich zur Partikelemission ohne Zuschalten eines zuschaltbaren elektrisch angetriebenen Verdichters.

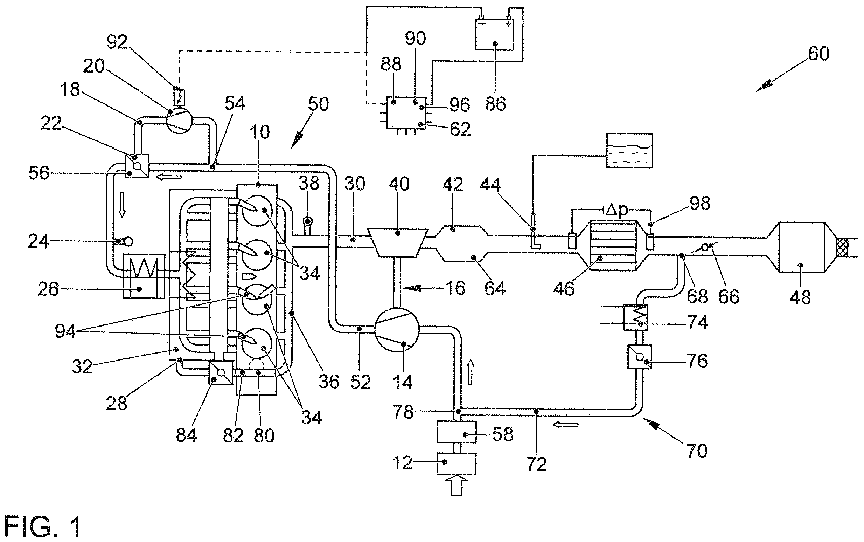

Figur 1 zeigt ein Ausführungsbeispiel einer erfindungsgemäßen Brennkraftmaschine 10 mit einem Luftversorgungssystem 50 und einer Abgasanlage 60. Die Brennkraftmaschine 10 ist als ein direkteinspritzender Dieselmotor ausgeführt und weist mehrere Brennkammern 34 auf. An den Brennkammern 34 ist jeweils ein Kraftstoffinjektor 94 zur Einspritzung eines Kraftstoffes in die jeweilige Brennkammer 34 angeordnet. Die Brennkraftmaschine ist einlassseitig mit einem Luftversorgungssystem 50 und auslassseitig mit einer Abgasanlage 60 verbunden. Die Brennkraftmaschine 10 umfasst ferner eine Hochdruck-Abgasrückführung 80 mit einer Abgasrückführungsleitung 82 und einem Hochdruck-Abgasrückführungsventil 84, über welches ein Abgas der Brennkraftmaschine 10 von einem Abgaskrümmer 36 auf der Abgasseite zu einem Einlasskrümmer 32 auf der Frischluftseite zurückgeführt werden kann. An den Brennkammern 34 sind Einlassventile und Auslassventile angeordnet, mit welchen eine fluidische Verbindung von dem Luftversorgungssystem 50 zu den Brennkammern 34 oder von der Brennkammer 34 zur Abgasanlage 60 geöffnet oder verschlossen werden kann.

Das Luftversorgungssystem 50 umfasst einen Ansaugkanal 52, in welchem in Strömungsrichtung von Frischluft durch den Ansaugkanal 52 ein Luftfilter 12, stromabwärts des Luftfilters 12 ein Luftmassenmesser 58, insbesondere ein Heißfilmluftmassenmesser und stromabwärts des Luftmassenmessers 58 ein Verdichter 14 eines Abgasturboladers 16 angeordnet sind. Stromabwärts des Verdichters 14 zweigt an einer Verzweigung 54 ein Bypass 18 aus dem Ansaugkanal 52 ab, wobei in dem Bypass 18 ein elektrisch antreibbarer Verdichter 20 angeordnet ist.

Der elektrisch antreibbare Verdichter 20 kann durch einen elektrischen Antriebsmotor 92 angetrieben werden, welcher aus einem Bordnetz 86 eines Kraftfahrzeuges, insbesondere einem 48-Volt-Bordnetz, mit Strom versorgt wird. Stromabwärts des elektrisch antreibbaren Verdichters 20 mündet der Bypass 18 wieder in den Ansaugkanal 52, wobei an einer Einmündung 56 des Bypasses 18 in den Ansaugkanal 52 eine Klappe 22, insbesondere eine Drei-Wege-Regelklappe, angeordnet ist, mit welcher ein Frischluftstrom wahlweise durch den Ansaugkanal 52, durch den Bypass 18 oder anteilig durch beide Kanäle 18, 52 geleitet werden kann.

Stromabwärts der Einmündung 56 und stromaufwärts eines Einlasskrümmers 32 der Brennkraftmaschine 10 ist ein Ladeluftkühler 26 angeordnet, mit welchem die Frischluft vor Eintritt in die Brennkammern 34 abgekühlt wird, um die Füllung der Brennkammern 34 zu verbessern. Stromabwärts der Klappe 22 und stromaufwärts des Ladeluftkühlers 26 ist ein erster Drucksensor 24 vorgesehen, welcher zur Steuerung oder Regelung des Frischluftmassenstroms und/oder der Hochdruck-Abgasrückführung 80 verwendet werden kann. Dazu ist stromabwärts des Ladeluftkühlers 26 eine Einlassstelle 28 vorgesehen, an welche das über die Hochdruck-Abgasrückführung 80 zurückgeführte Abgas der Frischluft aus dem Luftversorgungssystem 50 beigemischt wird.

Der Luftmassenmesser 58 und der Luftfilter 12 können auch in einem gemeinsamen Gehäuse angeordnet sein, sodass der Luftfilter 12 und der Luftmassenmesser 58 eine Baugruppe ausbildet. Stromabwärts des Luftfilters 12 und stromaufwärts des Verdichters 14 des Abgasturboladers 16 ist eine Einmündung 78 vorgesehen, an welcher eine Abgasrückführungsleitung 72 einer Niederdruck-Abgasrückführung 70 in den Ansaugkanal 52 mündet.

Die Abgasanlage 60 umfasst einen Abgaskanal 30, in welchem in Strömungsrichtung eines Abgases der Brennkraftmaschine 10 durch den ersten Abgaskanal 96 eine Turbine 40 des Abgasturboladers 16 angeordnet ist, welche den Verdichter 14 im Luftversorgungssystem 50 über eine Welle antreibt. Der Abgasturbolader 16 ist vorzugsweise als Abgasturbolader 16 mit variabler Turbinengeometrie ausgeführt. Dazu sind einem Turbinenrad der Turbine 40 verstellbare Leitschaufeln vorgeschaltet, über welche die Anströmung des Abgases auf die Schaufeln der Turbine 40 variiert werden kann. Stromabwärts der Turbine 40 sind mehrere Abgasnachbehandlungskomponenten 42, 46, 48, 64 vorgesehen.

Dabei ist unmittelbar stromabwärts der Turbine 40 als erste Komponente der Abgasnachbehandlung ein Oxidationskatalysator 42 oder ein NOx-Speicherkatalysator 64 angeordnet. Stromabwärts des Oxidationskatalysators 42 oder des NOx-Speicherkatalysators 64 ist ein Partikelfilter 46 mit einer Beschichtung zur selektiven katalytischen Reduktion von Stickoxiden (SCR-Beschichtung) angeordnet. Stromabwärts des Partikelfilters 46 ist vorzugsweise in Unterbodenlage eines Kraftfahrzeuges ein zweiter SCR-Katalysator 48 im Abgaskanal 96 angeordnet. Der zweite SCR-Katalysator 96 kann einen Oxidationskatalysator, insbesondere einen Ammoniak-Sperrkatalysator aufweisen. Alternativ kann dem zweiten SCR-Katalysator 52 ein Ammoniak-Sperrkatalysator nachgeschaltet sein.

Stromabwärts des Oxidationskatalysators 42 oder des NOx-Speicherkatalysators 64 und stromaufwärts des ersten SCR-Katalysators 48 ist eine Dosiereinheit 44 zur Eindosierung eines Reduktionsmittels, insbesondere von wässriger Harnstofflösung, in den Abgaskanal 96 vorgesehen. Stromabwärts des Partikelfilters 48 mit der SCR-Beschichtung zweigt eine Abgasrückführungsleitung 72 einer Niederdruck-Abgasrückführung 70 an einer Verzweigung 68 aus dem Abgaskanal 96 ab. Stromabwärts der Verzweigung 72 und stromaufwärts des zweiten SCR-Katalysators 52 ist eine Abgasklappe 66 angeordnet, mit welcher die Abgasrückführung über die Niederdruck-Abgasrückführung 70 gesteuert werden kann.

Die Niederdruck-Abgasrückführung 70 umfasst neben der Abgasrückführungsleitung 72 einen Abgasrückführungskühler 74 und ein Abgasrückführungsventil 76, über welches die Abgasrückführung durch die Abgasrückführungsleitung 72 steuerbar ist. In dem Abgaskanal 96 kann eine Abgastemperatur durch einen Temperatursensor erfasst werden oder durch ein Steuergerät 90 berechnet werden, um die Niederdruck-Abgasrückführungen 70 zu aktivieren, sobald die Abgastemperatur T_{EG} einen definierten Schwellenwert überschritten hat. An der Abgasrückführungsleitung 72 der Niederdruck-Abgasrückführung 70 kann ein weiterer Temperatursensor vorgesehen werden, um die Temperatur des zurückgeführten Abgases stromabwärts des Abgasrückführungskühlers 74 zu ermitteln. Dadurch kann vermieden werden, dass das zurückgeführte Abgas so stark gekühlt wird, dass der Taupunkt unterschritten wird und es zu einem Auskondensieren von Wassertropfen in der Abgasrückführungsleitung 72 kommt. Somit kann verhindert werden, dass Wasserdampf oder im Abgas enthaltene Gaskomponenten auskondensieren und in der Abgasrückführung 70 oder im Luftversorgungssystem 50 zu Beschädigungen oder Ablagerungen führen.

Stromabwärts der Verzweigung 68 und stromaufwärts des Abgasrückführungskühlers 74 kann ein Filter vorgesehen werden, um den Eintrag von Partikeln in die Niederdruck-Abgasrückführung 70 zu minimieren. Die Abgasrückführungsleitung 72 mündet an einer Einmündung 78 in den Ansaugkanal 52 des Luftversorgungssystems 50.

In der Abgasanlage 40 ist stromabwärts des Abgaskrümmers 36 und stromaufwärts der Turbine 40 des Abgasturboladers 16 ein zweiter Drucksensor 38 vorgesehen. Dieser kann zur Bestimmung des Abgasgegendrucks und/oder zur Bemessung/Errechnung der Abgasrückführrate genutzt werden.

Dem Partikelfilter 46 ist ein Differenzdrucksensor 98 zugeordnet, mit welchem eine Druckdifferenz Δp über den Partikelfilter 46 ermittelt werden kann. Auf diese Weise kann der Beladungszustand des Partikelfilters 46 ermittelt und bei Überschreiten eines definierten Beladungsniveaus eine Regeneration des Partikelfilters 46 eingeleitet werden. Ferner ist in der Abgasanlage 60 ein Temperatursensor vorgesehen, um die Abgastemperatur T_{EG} zu ermitteln.

Stromabwärts der Dosiereinheit 44 und stromaufwärts des Partikelfilters 46 kann ein Abgasmischer 68 vorgesehen sein, um eine Durchmischung von Abgasstrom der Brennkraftmaschine 10 und des Reduktionsmittels vor Eintritt in den Partikelfilter 46 zu verbessern und die Länge der Mischstrecke zu verkürzen.

Die Brennkraftmaschine 10 ist mit einem Steuergerät 90 verbunden, welches einen Rechner 88 und einen Speicher 96 aufweist. Das Steuergerät 90 ist über nicht dargestellte Signalleitungen mit den Druck-Sensoren 24, 38, 98, den Temperatursensoren, den Kraftstoffinjektoren 94 der Brennkraftmaschine 10, der Dosiereinheit 44 und dem elektrisch antreibbaren Verdichter 20 verbunden.

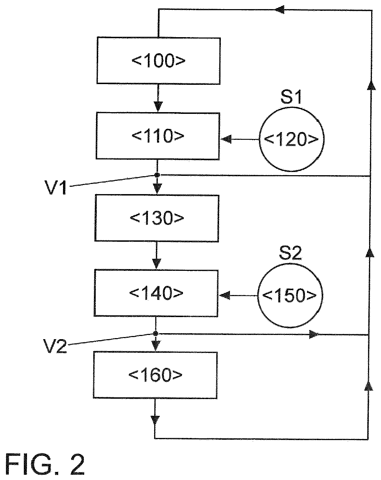

In Figur 2 ist ein Ablaufdiagramm zur Durchführung eines erfindungsgemäßen Verfahrens zum Betreiben einer Brennkraftmaschine 10 dargestellt. Dabei sollen durch ein Zuschalten des wahlweise antreibbaren Verdichters 20 die Partikelemissionen minimiert werden. Mithilfe des wahlweise antreibbaren elektrischen Verdichters 20 im Luftversorgungssystem 50 kann insbesondere im dynamischen Betrieb der Brennkraftmaschine 10 und dort gerade bei positiven Lastsprüngen die Füllung der Brennkammern 34 so weit angehoben werden, dass die Partikelemissionen in diesen Betriebszuständen deutlich abgesenkt werden können. Die Vorteile eines Zuschaltens des wahlweise antreibbaren elektrischen Verdichters 20 nehmen mit steigender spezifischer Leistung der Brennkraftmaschine 10 zu, da mit größerem Düsendurchfluss der Kraftstoffinjektoren 94, welcher zum Erreichen höhere Leistungen notwendig ist, auch das Niveau der Partikelrohemissionen ansteigt.

In einem ersten Verfahrensschritt <100> wird an einem Startpunkt des Verfahrens die Abweichung Δp zwischen Ist-Ladedruck p_{IST} und Soll-Ladedruck p_{SOLL} aus einem Modell oder gemessenen Werten der Brennkraftmaschine 10 bestimmt. Diese Abweichung Δp wird in einem ersten Vergleichsschritt <110> mit einem ersten Schwellenwert S1 verglichen. Dieser erste Schwellenwert S1 wird parallel aus einem Basis-Schwellenwert S_{B} und einer Korrekturtabelle in einem Verfahrensschritt <120> als Korrekturermittlung 12 bestimmt. Dabei umfasst die Korrekturtabelle Korrekturwerte K_{F}, die Betriebspunkten und/oder Zuständen der Brennkraftmaschine 10 zugeordnet sind. Innerhalb der Korrekturwerte K_{F} gibt es eine Größenabhängigkeit, bei der die Korrekturwerte K_{F} im Betrag einen höheren Wert haben, wenn sie zu einem Betriebspunkt oder Betriebszustand gehören, der einen gravierenderen Einfluss auf den Betrieb des wahlweise betreibbaren Verdichters 20 hat. Sollte der Schwellenwert S1 kleiner als die Abweichung Δp sein, so wird der wahlweise betreibbare Verdichter 20 in einem Verfahrensschritt <130> eingeschaltet.

Sobald der wahlweise betreibbare Verdichter 20 betrieben wird, wird die Abweichung Δp des Ladedrucks mit einem zweiten Schwellenwert S2 in einem zweiten Vergleichsschritt <140> verglichen. Der zweite Schwellenwert S2 wird in einer zweiten Korrekturermittlung <150> ermittelt. Dieser zweite Schwellenwert S2 besteht auch aus einem Basiswert S_{B} und einem Korrekturfaktor K_{F2}. Für den Korrekturfaktor K_{F2} gilt hier in den Tendenzen dasselbe wie für die Korrekturwerte K_{F} des ersten Schwellenwertes S1, allerdings können die absoluten Beträge unterschiedlich sein. Sollte der zweite Schwellenwert S2 kleiner oder größer als die korrigierte Abweichung sein, so wird der wahlweise betreibbare Verdichter 20 in einem Verfahrensschritt <160> ausgeschaltet. Sollte der zweite Schwellenwert S2 größer oder kleiner als die korrigierte Abweichung sein, so wird der wahlweise betreibbare Verdichter 20 eingeschaltet gelassen und es wird wieder beim Startpunkt <100> begonnen.

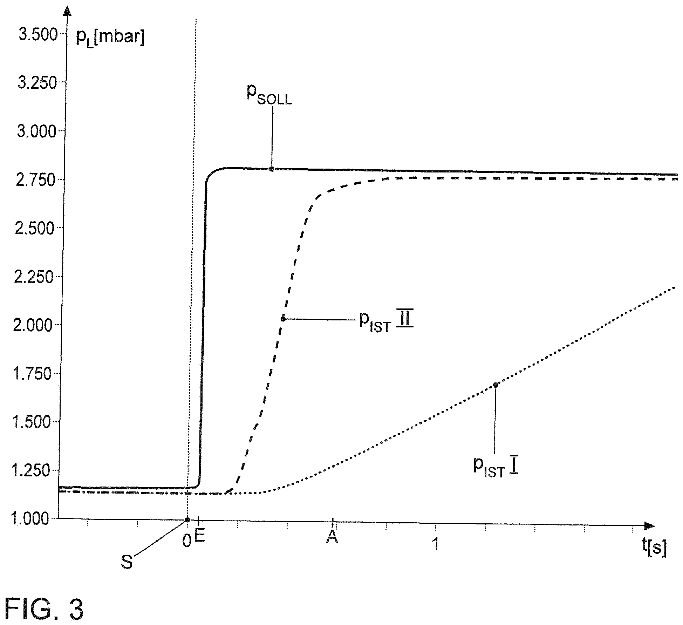

In Figur 3 ist der Ladedruckaufbau bei einem erfindungsgemäßen Verfahren, bei welchem der wahlweise betreibbare Verdichter 20 zugeschaltet wird, im Vergleich zu einem Verfahren dargestellt, bei welchem der Ladedruck p_{L} ausschließlich durch den Verdichter 14 des Abgasturboladers 16 aufgebaut wird. Dabei ist der Ladedruck p_{L} im Verlauf über die Zeit t dargestellt. In einer ersten Kurve p_{IST I} ist der Verlauf des Ladedrucks eines Abgasturboladers ohne zusätzlichen Verdichter dargestellt. In einer zweiten Kurve p_{IST II} ist der Ladedruck mit einem zusätzlichen elektrisch angetriebenen Verdichter 20 dargestellt, welcher zusätzlich zum Verdichter 14 des Abgasturboladers zugeschaltet werden kann. Dabei wird der elektrisch antreibbare Verdichter 20 unmittelbar nach einer Lastanforderung S, welche das erfindungsgemäße Verfahren startet, an einem Zeitpunkt E eingeschaltet und bei einer Annäherung des Ist-Ladedrucks an den Soll-Ladedruck zu einem Zeitpunkt A abgeschaltet. Es ist zu erkennen, dass der Ist-Ladedruck P_{IST} dem Soll-Ladedruck P_{SOLL} bei einer Lastanforderung S bei einem erfindungsgemäßen Verfahrens deutlich schneller folgt und somit das sogenannte Turboloch vermeidet. Dadurch wird eine deutlich bessere Füllung der Brennkammern 34 erreicht. Aus der deutlich besseren Füllung der Brennkammern 34 resultiert die Tatsache, dass zur Umsetzung des Kraftstoffes mehr Sauerstoff zur Verfügung steht, wodurch die Neigung zur Rußbildung gesenkt wird und die Rußpartikel-Rohemissionen minimiert werden.

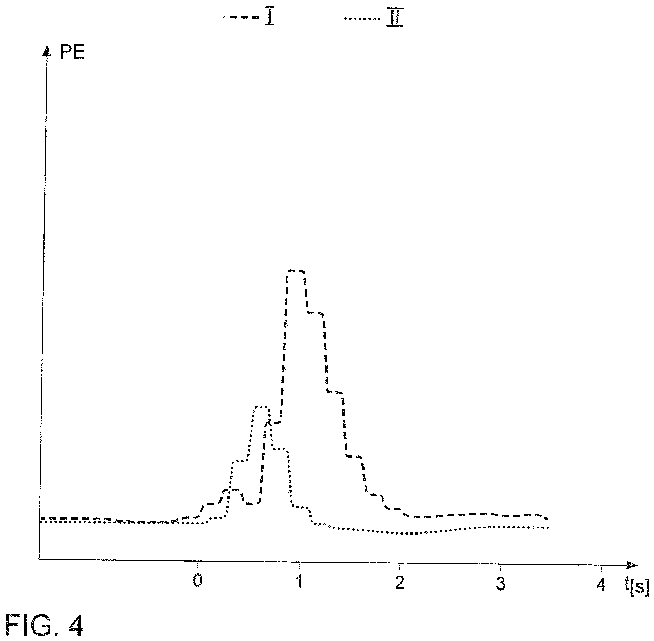

In Figur 4 sind die Rußpartikel-Rohemissionen I bei der Durchführung eines erfindungsgemäßen Verfahrens im Vergleich zu den Rohemissionen II ohne das Zuschalten eines wahlweise betreibbaren Verdichters 20 dargestellt. Dabei ist die Partikelemission PE über der Zeit t aufgetragen. Wie aus Figur 4 zu erkennen ist, führt die Durchführung eines erfindungsgemäßen Verfahrens zu einer signifikanten Verringerung der Rußpartikel-Emissionen bei dynamischen Lastzuständen der Brennkraftmaschine 10.

### Bezugszeichenliste

- 10: Brennkraftmaschine
- 12: Luftfilter
- 14: Verdichter
- 16: Abgasturbolader
- 18: Bypass

- 20: elektrisch angetriebener Verdichter
- 22: Steuerelement
- 24: erster Drucksensor
- 26: Ladeluftkühler
- 28: Einlassstelle

- 30: Abgaskanal
- 32: Einlasskrümmer
- 34: Brennkammer
- 36: Abgaskrümmer
- 38: zweiter Drucksensor

- 40: Turbine
- 42: Dieseloxidationskatalysator
- 44: Dosiereinheit
- 46: Partikelfilter
- 48: SCR-Katalysator

- 50: Luftversorgungssystem
- 52: Ansaugkanal
- 54: Verzweigung
- 56: Einmündung
- 58: Luftmassenmesser

- 60: Abgasanlage
- 62: Programm
- 64: NOx-Speicherkatalysator
- 66: Abgasklappe
- 68: Verzweigung

- 70: Niederdruck-Abgasrückführung
- 72: Abgasrückführungsleitung
- 74: Abgasrückführungskühler
- 76: Abgasrückführungsventil
- 78: Einmündung

- 80: Hochdruck-Abgasrückführung
- 82: Abgasrückführungsleitung
- 84: Abgasrückführungsventil
- 86: Bordnetz
- 88: Rechner

- 90: Steuergerät
- 92: elektrisches Antriebsmotor
- 94: Kraftstoffinjektor
- 96: Speicher
- 98: Differenzdrucksensor

- A: Abschaltpunkt
- E: Einschaltzeitpunkt
- K1: erste Korrekturermittlung
- K2: zweite Korrekturermittlung
- K_{F}: Korrekturwert

- p_{IST}: Ist-Ladedruck
- p_{SOLL}: Soll-Ladedruck
- S: Startpunkt
- S1: erster Schwellenwert
- S2: zweiter Schwellenwert
- S_{B}: Basisschwellenwert
- V1: erster Vergleichspunkt
- V2: zweiter Vergleichspunkt
- Δp: Abweichung zwischen Soll-Ladedruck und Ist-Ladedruck

## Patentansprüche

1. Verfahren zum Betreiben einer Brennkraftmaschine (10) mit einem wahlweise antreibbaren Verdichter (20) und einem Bordnetz (86) der Brennkraftmaschine (10), wobei an das Bordnetz (86) der Brennkraftmaschine (10) der wahlweise antreibbare Verdichter (20) angeschlossen ist und das Bordnetz (86) den wahlweise antreibbaren Verdichter (20) und ein Steuergerät (90) mit elektrischer Energie versorgt, wobei das Steuergerät (90) das Ein- und/oder Abschalten des wahlweise antreibbaren Verdichters (20) bestimmt und dazu ein Ist-Ladedruck (p_{IST}) der Brennkraftmaschine (10) mit dem Steuergerät (90) ermittelt, dieser Ist-Ladedruck (p_{IST}) wird mit einem Soll-Ladedruck (p_{SOLL}) verglichen, wobei der Soll-Ladedruck (p_{SOLL}) von dem Steuergerät (90) berechnet wird und/oder aus einem abgelegten Kennfeld entnommen wird und in einem folgenden Schritt die Abweichung (Δp) zwischen Soll-Ladedruck (p_{SOLL}) und Ist-Ladedruck (p_{IST}) durch das Steuergerät (90) bestimmt wird, wobei diese Abweichung (Δp) in einem Entscheidungsschritt mit einem ersten Schwellenwert (S1) verglichen wird, sollte die Abweichung (Δp) größer als der erste Schwellenwert (S1) sein, so wird der wahlweise antreibbare Verdichter (20) eingeschaltet oder ausgeschaltet,
**dadurch gekennzeichnet,**
**dass** der erste Schwellenwert (S1) aus einem jeweiligen Basis-Schwellenwert (S_{B}) besteht, der durch Korrekturwerte (K_{f}) in Abhängigkeit des Zustandes der Brennkraftmaschine (10) und/oder eines durch die Brennkraftmaschine (10) betriebenen Objekts korrigiert wird.

2. Verfahren zum Betreiben einer Brennkraftmaschine (10) nach Anspruch 1,
**dadurch gekennzeichnet,**
**dass** wenn der wahlweise antreibbare Verdichter (20) eingeschaltet worden ist, erneut die Abweichung zwischen Ist-Ladedruck (p_{IST}) und Soll-Ladedruck (p_{SOLL}) bestimmt wird und nun mit einem zweiten Schwellenwert (S2) verglichen wird und wenn die Abweichung (Δp) kleiner ist als der zweite Schwellenwert (S2), so wird der wahlweise antreibbare Verdichter (20) abgeschaltet oder ausgeschaltet.

3. Verfahren zum Betreiben einer Brennkraftmaschine (10) nach Anspruch 1,
**dadurch gekennzeichnet,**
**dass** erneut mit einer Bestimmung der Abweichung (Δp) zwischen Ist-Ladedruck (p_{IST}) und Soll-Ladedruck (p_{SOLL}) begonnen wird, wenn sich ein Einschaltzustand des wahlweise antreibbaren Verdichters (20) nicht ändert.

4. Verfahren zum Betreiben einer Brennkraftmaschine (10) nach einem der Ansprüche 1 bis 3,
**dadurch gekennzeichnet,**
**dass** die Entscheidung zum Zu- oder Abschalten des wahlweise antreibbaren Verdichters (20) auf Basis eines mindestens einen variablen Betriebsparameters der Brennkraftmaschine (10) erfolgt.

5. Verfahren zum Betreiben einer Brennkraftmaschine (10) nach Anspruch 4,
**dadurch gekennzeichnet,**
**dass** die Entscheidung auf Basis der Drehzahl der Brennkraftmaschine (10), einer Drehmomentanforderung an die Brennkraftmaschine (10), einer Dynamik der Betriebspunktänderung der Brennkraftmaschine (10) oder einer Kühlmitteltemperatur der Brennkraftmaschine (10) erfolgt.

6. Verfahren zum Betreiben einer Brennkraftmaschine (10) nach einem der Ansprüche 1 bis 5,
**dadurch gekennzeichnet,**
**dass** die Entscheidung zum Zu- oder Abschalten des wahlweise antreibbaren Verdichters (20) auf Basis einer Schadstoffkonzentration in der Abgasanlage (60) oder eines gemessenen Betriebsparameters mindestens einer Abgasnachbehandlungskomponente (42, 44, 46, 48, 64) erfolgt.

7. Verfahren zum Betreiben einer Brennkraftmaschine (10) nach Anspruch 6,
**dadurch gekennzeichnet,**
**dass** die Entscheidung auf Basis einer Temperatur einer Abgasnachbehandlungskomponente (42, 44, 46, 48, 64), einer Rußbeladung des Partikelfilters (46), eines Beladungszustands eines NOx-Speicherkatalysators (64), der NOx-Rohemissionen der Brennkraftmaschine (10), der Partikelrohemissionen der Brennkraftmaschine (10) oder der Abgastemperatur an zumindest einer Stelle im Abgaskanal (30) erfolgt.

8. Verfahren zum Betreiben einer Brennkraftmaschine (10) nach einem der Ansprüche 1 bis 7,
**dadurch gekennzeichnet,**
**dass** die Entscheidung zum Zu- oder Abschalten des wahlweise antreibbaren Verdichters (20) auf Basis eines durch das Steuergerät (90) berechneten Parameters erfolgt.

9. Verfahren zum Betreiben einer Brennkraftmaschine (10) nach Anspruch 8,
**dadurch gekennzeichnet,**
**dass** die Entscheidung auf Basis einer modellierten NOx-Rohemission, einer modellierten Partikelrohemission, einer in die Brennräume eindosierten Kraftstoffmenge oder einer modellierten Beladung einer Abgasnachbehandlungskomponente erfolgt.

10. Verfahren zum Betreiben einer Brennkraftmaschine (10) nach einem der Ansprüche 1 bis 9,
**dadurch gekennzeichnet,**
**dass** die Entscheidung zum Zu- oder Abschalten des wahlweise antreibbaren Verdichters (20) auf Basis eines weiteren Kraftfahrzeugparameters oder Umweltparameters erfolgt.

11. Verfahren zum Betreiben einer Brennkraftmaschine (10) nach Anspruch 10,
**dadurch gekennzeichnet,**
**dass** die Entscheidung zum Zu- oder Abschalten des wahlweise antreibbaren Verdichters (20) auf Basis einer eingelegten Getriebeübersetzung, eines Gangwechsels im Getriebe, eines Beschleunigungswertes, einer Gaspedalstellung oder einer Umgebungstemperatur oder eines Umgebungsdrucks erfolgt.

12. Verfahren zum Betreiben einer Brennkraftmaschine (10) nach einem der Ansprüche 4 bis 11,
**dadurch gekennzeichnet,**
**dass** die Entscheidung zum Zu- oder Abschalten des wahlweise antreibbaren Verdichters (20) auf Basis einer Kombination von mindestens zwei Betriebsparametern erfolgt.

13. Brennkraftmaschine (10) mit einem wahlweise antreibbaren Verdichter (20) und einem Bordnetz (86) der Brennkraftmaschine (10), wobei an das Bordnetz (86) der Brennkraftmaschine (10) der wahlweise antreibbare Verdichter (20) angeschlossen ist und das Bordnetz (86) den wahlweise antreibbaren Verdichter (20) und ein Steuergerät (90) mit elektrischer Energie versorgt, wobei das Steuergerät (90) zumindest einen Rechner (88) und zumindest einen Speicher (96) umfasst,
**dadurch gekennzeichnet,**
**dass** in dem Speicher (96) ein Programm (62) abgelegt ist, welches bei wenigstens teilweiser Ausführung im Rechner (88) die Schritte des Verfahrens zum Betreiben der Brennkraftmaschine (10) nach einem der Ansprüche 1 bis 12 ausführt.

14. Brennkraftmaschine (10) nach Anspruch 13,
**dadurch gekennzeichnet,**
**dass** die Brennkraftmaschine (10) ein Luftversorgungssystem (50) und eine Abgasanlage (60) umfasst, wobei in dem Luftversorgungssystem (50) ein Verdichter (14) eines Abgasturboladers (16) und stromabwärts des Verdichters (14) ein wahlweise antreibbarer Verdichter (20) angeordnet ist.

15. Brennkraftmaschine (10) nach Anspruch 13 oder 14,
**dadurch gekennzeichnet,**
**dass** der wahlweise antreibbare Verdichter (20) in einem Bypass (18) eines Ansaugkanals (52) des Luftversorgungssystems (50) angeordnet ist, wobei der Bypass (18) durch ein Steuerelement (22) geöffnet oder verschlossen werden kann.
